# EUROPÄISCHE PATENTSCHRIFT

(11) **EP 3 566 161 B1**
(45) Veröffentlichungstag und Bekanntmachung des Hinweises auf die Patenterteilung: **15.07.2020**
(21) Anmeldenummer: 18759618.4
(22) Anmeldetag: 24.08.2018
(51) Int. Cl.: G06F 21/31, G06F 21/32, G06F 21/35

(54) **SIGNATURSYSTEM ZUR VERIFIKATION EINER UNTERSCHRIFT, SOWIE EIN ENTSPRECHENDES SIGNATURVERFAHREN**
SIGNATURE SYSTEM FOR VERIFYING A SIGNATURE, AND CORRESPONDING SIGNATURE METHOD
SYSTÈME DE SIGNATURE PERMETTANT DE VERIFIER UNE SIGNATURE ET PROCÉDÉ DE SIGNATURE CORRESPONDANT

(30) Priorität: 28.03.2018 DE 102018107415
(43) Veröffentlichungstag der Anmeldung: 13.11.2019
(73) Patentinhaber: Fatih, Selahattin, 32051 Herford (DE)
(72) Erfinder: Fatih, Selahattin, 32051 Herford (DE)
(74) Vertreter: Ter Meer Steinmeister & Partner
(86) Internationale Anmeldenummer: PCT/EP2018/072842
(87) Internationale Veröffentlichungsnummer: WO 2019/185178

(56) Entgegenhaltungen:
- US-A1- 2011 320 352
- US-A1- 2014 029 811
- US-A1- 2018 032 162
- US-B1- 9 372 969

## Beschreibung

Die vorliegende Erfindung betrifft ein Signatursystem zur Verifikation einer Unterschrift, sowie ein entsprechendes Signaturverfahren.

Signatursysteme und entsprechende Verfahren existieren schon seit langem in unterschiedlichen Ausführungsformen, die insbesondere an die fortschreitende technische Entwicklung der Telekommunikation angepasst worden sind. Grundsätzlich lösen solche Systeme das Problem, die Identität eines Benutzers zu verifizieren, der eine Eingabe tätigt, zu welcher ausschließlich ein autorisierter Benutzer befugt ist. Eingaben nicht autorisierter Benutzer werden dann nicht akzeptiert oder zumindest vom System erkannt. Besondere Bedeutung haben solche Systeme bei Geldtransfers, beispielsweise beim Onlinebanking oder in Bezahlsystemen im Internet. Beispielsweise muss der Benutzer für eine Transaktion eine persönliche Identifikationsnummer oder dergleichen eingeben, die nur ihm als einzigem Benutzer zur Verfügung steht, und welche vom Empfänger verifiziert wird. Auf nähere Einzelheiten solcher Systeme und Verfahren soll hier nicht eingegangen werden, da diese an sich bekannt sind.

Signatursysteme sind beispielsweise aus US 2018/032162 A1, US 9,372,969 B1 und US 2011/320352 A1 bekannt.

Ein besonderes Problem stellt die Verifikation der von Hand geleisteten Unterschrift einer Person dar, die auf einem Schriftstück geleistet wird. Im Rechtsverkehr wird eine solche händische Unterschrift als Beweis dafür gewertet, dass die unterzeichnende Person beispielsweise den Inhalt des unterzeichneten Schriftstücks zur Kenntnis genommen hat oder dieses selbst verfasst hat. Dieses System, das weit älter ist als die eingangs beschriebenen elektronischen Signatursysteme, beruht darauf, dass die Unterschrift einer Person individuell ist und nur mit großem Geschick und Aufwand fälschbar ist.

Grundsätzlich lassen sich solche Fälschungen allerdings nicht ausschließen. Da dieses System grundsätzlich auf der Papierform beruht, lässt es sich nur schwer verbessern, ohne dass ein zusätzlicher Aufwand durch die involvierten Personen, also den Benutzer oder den Empfänger des Schriftstücks, geleistet werden muss.

In Anbetracht der vorstehend beschriebenen Probleme ist es daher eine Aufgabe der vorliegenden Erfindung, ein Signatursystem zur Verifikation einer Unterschrift zu schaffen, welches das seit langem bekannte und auf der Papierform basierende Unterschriftsverfahren verbessert und sicherer macht, ohne dass wesentlicher zusätzlicher Aufwand entsteht.

Diese Aufgabe wird erfindungsgemäß durch ein Signatursystem mit den Merkmalen des Anspruchs 1 gelöst, sowie durch ein entsprechendes Signaturverfahren gemäß Anspruch 16.

Bei dem erfindungsgemäßen Signatursystem steht dem Benutzer, das heißt der unterzeichnenden Person, ein von Hand bedienbares Schreibgerät zur Verfügung, wie etwa ein Stift oder dergleichen. Das Schreibgerät ist dazu vorgesehen, in herkömmlicher Weise händisch eine Unterschrift auf einem Schriftstück zu leisten. Darüber hinaus ist das erfindungsgemäße Schreibgerät jedoch mit Identifikationseinrichtungen ausgestattet, die dazu vorgesehen sind, Identifikationsdaten zu ermitteln, die mit der Identität des Benutzers des Schreibgeräts verknüpft sind. Damit kann das Schreibgerät seinen aktuellen Benutzer erkennen. Hierzu sind verschiedene Varianten von Identifikationseinrichtungen denkbar, die geeignet zu wählen sind und Gegenstand verschiedener Ausführungsformen der vorliegenden Erfindung sind. Sie können zum Beispiel Eingabeeinrichtungen umfassen, in welche der Benutzer personenbezogene und nur ihm bekannte Daten eingeben kann, wie etwa einen persönlichen Zugangscode, eine persönliche Identifikationsnummer oder dergleichen, oder Sensoren, die zur Ermittlung von Daten vorgesehen sind, die es gestatten, die Identität des Benutzers eindeutig festzustellen.

Aus diesen benutzerspezifischen Identifikationsdaten lässt sich ein Identifikationscode erzeugen, der vom Schreibgerät selbst mittels geeigneter Anzeigeeinrichtungen, wie etwa eines Displays oder dergleichen, angezeigt werden kann. Der Benutzer kann den angezeigten Identifikationscode ablesen und mittels des Schreibgeräts auf dem zu unterzeichnenden Schriftstück niederschreiben. Das Schriftstück enthält dann außer der Unterschrift den generierten Identifikationscode. Dieser dient als zusätzlicher Beleg, dass die Unterschrift von einer Person geleistet worden ist, die mittels der Identifikationseinrichtungen des Schreibgeräts identifiziert worden ist.

Die Sicherheit des erfindungsgemäßen Systems bzw. Verfahrens ist dadurch erhöht, dass außer der Unterschrift selbst zusätzlich der Identifikationscode auf dem Schriftstück vermerkt ist, welcher anhand der Identifikationsdaten des Benutzers des Schreibgeräts generiert wird, sowie zusätzlich aus weiteren Daten, die weder dem Benutzer selbst noch Dritten ohne weiteres zur Verfügung stehen. Diese können beispielsweise sicherstellen, dass die Identifikationsdaten zu einem bestimmten Zeitpunkt an einem bestimmten Ort ermittelt worden sind, so dass verhindert wird, dass der Identifikationscode nachträglich auf dem Schriftstück notiert wird.

Gemäß einer bevorzugten Ausführungsform des erfindungsgemäßen Signatursystems umfassen die weiteren Daten Zeitdaten und/oder Ortsdaten, welche jeweils einen Zeitpunkt und eine Position des Schreibgeräts angeben. Die Zeitdaten und die Ortsdaten können hier also miteinander verknüpft sein und Zeit und Ort der Benutzung des Schreibgeräts eindeutig repräsentierten. Aus diesen und aus den Identifikationsdaten kann dann ein Identifikationscode erzeugt werden, in welchem die Information enthalten ist, dass ein bestimmter Benutzer (der durch die Identifikationsdaten bezeichnet wird) zu einer bestimmten Zeit an einem bestimmten Ort das Schreibgerät benutzt hat.

Gemäß einer weiteren bevorzugten Ausführungsform des Signatursystems umfassen die weiteren Daten einen Schlüssel, der in den Code-Erzeugungseinrichtungen gespeichert ist oder an diese übertragbar ist. Insbesondere ist dieser Schlüssel nicht öffentlich, sondern an einem verborgenen Ort unzugänglich gespeichert. Dritten ist es in diesem Fall nicht möglich, allein aufgrund gefälschter Identifikationsdaten oder mit Hilfe gefälschter Zeit- und/oder Ortsdaten den Identifikationscode zu generieren.

Weiter vorzugsweise sind die Identifikationseinrichtungen zur Erfassung eines Zugangscodes vorgesehen, der vom Benutzer einzugeben ist. Bei dem Zugangscode kann es sich beispielsweise um eine persönliche Identifikationsnummer oder dergleichen handeln, die nur dem Benutzer bekannt ist.

Weiter vorzugsweise sind die Identifikationseinrichtungen zur Erfassung biometrischer Merkmale des Benutzers vorgesehen. In diesem Fall kann sich eine aktive Eingabe eines Zugangscodes oder dergleichen durch den Benutzer erübrigen.

Gemäß einer bevorzugten Ausführungsform des Signatursystems umfassen die Identifikationseinrichtungen in diesem Fall einen Fingerabdruckscanner. Beispielsweise ist eine Ausführungsform denkbar, in welcher der Fingerabdruckscanner an einem Teil des Schreibgeräts vorgesehen ist, an welchem sich beim Schreiben ohnehin ein Finger des Benutzers befindet.

Gemäß einer weiteren Ausführungsform der Erfindung umfassen die Identifikationseinrichtungen einen Irisscanner.

Gemäß einer weiteren Ausführungsform der Erfindung sind die Code-Erzeugungseinrichtungen in das Schreibgerät integriert. Hierbei kann es sich beispielsweise um einen Chip handeln, der in das Gehäuse des Schreibgeräts eingesetzt ist. Wenngleich in der vorliegenden Beschreibung und in den Patentansprüchen zwischen den Identifikationseinrichtungen und den Code-Erzeugungseinrichtungen begrifflich unterschieden wird, umfasst der Gegenstand der Erfindung auch Signatursysteme, in welchen die Identifikationseinrichtungen und die Code-Erzeugungseinrichtungen durch die gleiche Einheit verwirklicht sind.

Weiter vorzugsweise umfasst das erfindungsgemäße Signatursystem eine externe Kommunikationseinheit, in welche die Code-Erzeugungseinrichtungen integriert sind und Kommunikationsmittel zur Übertragung der Identifikationsdaten vom Schreibgerät zu der externen Kommunikationseinheit und zur Rückübertragung des erzeugten Identifikationscodes zum Schreibgerät. Im vorliegenden Fall sind die Code-Erzeugungseinrichtungen, in welchen der Identifikationscode erzeugt wird, aus dem Schreibgerät ausgelagert und von diesem entfernt angeordnet. Denkbar sind Ausführungsformen, in welchen eine externe Kommunikationseinheit mehreren Schreibgeräten zur Verfügung steht und für diese jeweils getrennte Verifikationsprozesse durchführt, das heißt die entsprechenden Identifikationsdaten empfängt und individuelle Identifikationscodes zurück an die Schreibgeräte überträgt.
Vorzugsweise sind die Kommunikationsmittel drahtlose Kommunikationsmittel.

Weiter vorzugsweise umfassen die Kommunikationsmittel ein mobiles Terminal, welches zur Kommunikation einerseits mit dem Schreibgerät und andererseits mit der externen Kommunikationseinheit eingerichtet ist. Auf diese Weise ist es beispielsweise möglich, Einrichtungen, die zum Aufbau einer Fernverbindung mit der externen Kommunikationseinheit notwendig sind, in das mobile Terminal auszulagern, welches andererseits mit dem Schreibgerät eine Nahverbindung aufbauen kann. Dies kann den Vorteil bieten, dass das Schreibgerät selbst weniger aufwändig gestaltet ist und für die Realisierung des erfindungsgemäßen Signatursystems Komponenten genutzt werden, die ohnehin in marktüblichen mobilen Terminals zur Verfügung stehen. Denkbar ist beispielsweise die Verwendung eines marktüblichen Mobiltelefons oder eines Tabletcomputers als mobiles Terminal.

Vorzugsweise ist das mobile Terminal in diesem Fall zur Kommunikation mit dem Schreibgerät über einen Nahverbindungs-Übertragungsstandard und zur Kommunikation mit der externen Kommunikationseinheit über einen Mobilfunk-Übertragungsstandard eingerichtet. Bei dem Nahverbindungs-Übertragungsstandard kann es sich beispielsweise um den Bluetooth-Standard handeln, während es sich bei dem Mobilfunk-Übertragungsstandard beispielsweise um einen aktuell üblichen Standard wie etwa LTE oder dergleichen handeln kann.

Gemäß einer weiteren bevorzugten Ausführungsform der vorliegenden Erfindung umfasst die externe Kommunikationseinheit ein mobiles Terminal. Das bedeutet, dass bei dieser Ausführungsform das mobile Terminal selbst die Code-Erzeugungseinrichtungen umfasst.

Weiter vorzugsweise umfasst die externe Kommunikationseinheit einen Speicher zur Speicherung des Identifikationscodes und/oder der Identifikationsdaten.

Vorzugsweise ist das Schreibgerät ein Stift. Das Schreibgerät hat also in diesem Fall die üblichen und allgemein bekannten Funktionen eines Stiftes, welche die Erzeugung einer Unterschrift auf einem Schriftstück wie etwa einem Blatt Papier zulässt, darüber hinaus jedoch weitere Komponenten zur Realisierung des erfindungsgemäßen Signatursystems enthält, insbesondere die eingangs beschriebenen Identifikationseinrichtungen.

Die vorliegende Erfindung betrifft ferner ein Signaturverfahren zur Verifikation einer Unterschrift, umfassend die folgenden Schritte:
- Erstellen einer Unterschrift mittels eines Schreibgeräts auf einem Schriftstück,
- Identifizieren des Benutzers des Schreibgeräts durch das Schreibgerät,
- Erzeugen eines Identifikationscodes aus Identifikationsdaten, die mit der Identität des Benutzers verknüpft sind, und aus weiteren Daten,
- Anzeigen des Identifikationscodes durch das Schreibgerät,
- Niederschrift des Identifikationscodes auf dem Schriftstück.

Gemäß einer bevorzugten Ausführungsform dieses Signaturverfahrens umfassen die weiteren Daten Zeitdaten und/oder Ortsdaten, welche jeweils einen Zeitpunkt und eine Position des Schreibgeräts angeben.

Vorzugsweise umfassen die weiteren Daten einen Schlüssel, der in Einrichtungen, die den Identifikationscode erzeugen, gespeichert ist oder an diese übertragbar ist.

Weiter vorzugsweise wird der Benutzer anhand eines von ihm eingegebenen Zugangscodes identifiziert.

Weiter vorzugsweise wird der Benutzer anhand biometrischer Merkmale identifiziert.

Gemäß einer weiteren Ausführungsform des vorliegenden Signaturverfahrens wird der Identifikationscode durch das Schreibgerät erzeugt.

Gemäß einer weiteren Ausführungsform des erfindungsgemäßen Signaturverfahrens wird der Identifikationscode durch eine externe Kommunikationseinheit erzeugt, an welche die Identifikationsdaten vom Schreibgerät übertragen werden und welche den erzeugten Identifikationscode zurück zum Schreibgerät überträgt.
Vorzugsweise werden die Identifikationsdaten in diesem Fall über ein mobiles Terminal an die externe Kommunikationseinheit übertragen, und der Identifikationscode wird über dieses mobile Terminal zurück zum Schreibgerät übertragen.

Gemäß einer alternativen Ausführungsform des erfindungsgemäßen Signatursystems ist die externe Kommunikationseinheit selbst ein mobiles Terminal.

Weiter vorzugsweise werden der Identifikationscode und/oder die Identifikationsdaten in der externen Kommunikationseinheit gespeichert.

Bevorzugte Ausführungsformen der vorliegenden Erfindung werden im Folgenden anhand der Zeichnung näher erläutert.

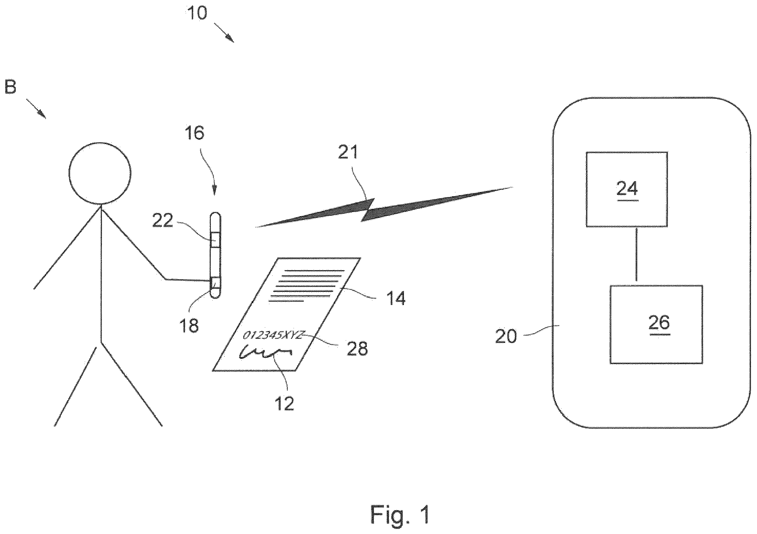

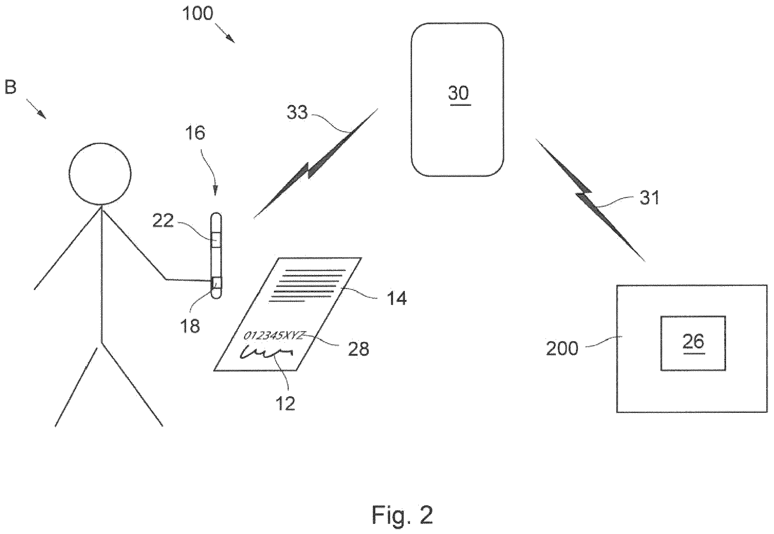

Fig. 1 und 2 sind jeweils schematische Darstellungen einer ersten Ausführungsform und einer zweiten Ausführungsform des erfindungsgemäßen Signatursystems.

Das in Fig. 1 schematisch dargestellte Signatursystem 10 dient zur Verifikation einer Unterschrift 12 auf einem Schriftstück 14. Die Unterschrift 12 wird von einem Benutzer B mit Hilfe eines Schreibgeräts 16 geleistet, welches von dem Benutzer B mit der Hand geführt und bedient werden kann. Demnach handelt es sich bei dem Schreibgerät 16 um einen Stift, der außer den herkömmlichen Schreibfunktionen eines Stifts weitere Funktionen und Komponenten aufweist, die Bestandteil des Signatursystems 10 sind und im Folgenden näher erläutert werden sollen. Das Schriftstück 14 ist ein beispielsweise ein Ausdruck auf einem Bogen Papier.

Das Schreibgerät 16 umfasst Identifikationseinrichtungen zur Ermittlung von Identifikationsdaten, die mit der Identität des Benutzers B des Schreibgeräts 16 verknüpft sind. Diese Verknüpfung ist eindeutig und erlaubt somit eine zweifelsfreie und individuelle Identifizierung des Benutzers B anhand seiner Identifikationsdaten. Bei der vorliegenden Ausführungsform des Signatursystems 10 umfassen die Identifikationseinrichtungen einen Fingerabdruckscanner 18. Dieser Fingerabdruckscanner 18 erfasst einen Fingerabdruck des Benutzers B und ermittelt daraus die Identifikationsdaten. Insbesondere kann der Fingerabdruckscanner 18 in einer Position am Schreibgerät 16 angeordnet sein, in der sich bei der Benutzung des Schreibgeräts 16 während des Schreibvorgangs gewöhnlich ein Finger des Benutzers B befindet. Das Scannen des Fingerabdrucks kann somit automatisch während der Benutzung des Schreibgeräts 16 ohne eine zusätzliche Eingabehandlung durchgeführt werden.

Die Identifikationseinrichtungen können auch andere biometrische Merkmale des Benutzers B erfassen. Beispielsweise können die Identifikationseinrichtungen einen Irisscanner umfassen, welcher dazu vorgesehen ist, die Iris eines Auges des Benutzers B zu scannen und hieraus die Identifikationsdaten zu ermitteln. Alternativ können die Identifikationseinrichtungen zur Eingabe bzw. Erfassung eines Zugangscodes vorgesehen sein, der vom Benutzer eingegeben wird. Bei diesem Zugangscode kann es sich beispielsweise um eine persönliche Identifikationsnummer (PIN) handeln.

Die ermittelten Identifikationsdaten werden drahtlos an eine externe Kommunikationseinheit 20 übertragen. Im vorliegenden Fall handelt es sich bei dieser externen Kommunikationseinheit 20 um ein mobiles Terminal, wie beispielsweise ein Mobiltelefon. Die Kommunikation kann beispielsweise über eine Nahverbindung 21 gemäß einem Nahverbindungs-Übertragungsstandard wie etwa Bluetooth erfolgen. Das Schreibgerät 16 ist zu diesem Zweck mit einer Sende- und Empfangseinheit 22 ausgestattet. Eine entsprechende Sende- und Empfangseinheit 24 ist in das mobile Terminal integriert.

Die ermittelten Identifikationsdaten werden somit von der Sende- und Empfangseinheit 22 des Schreibgeräts 16 drahtlos an die Sende- und Empfangseinheit 24 der externen Kommunikationseinheit 20 übertragen und intern an Code-Erzeugungseinrichtungen 26 zur Erzeugung eines Identifikationscodes übergeben. Dieser Identifikationscode wird aus den Identifikationsdaten sowie aus weiteren Daten generiert. Bei diesen weiteren Daten kann es sich insbesondere um Zeitdaten und/oder Ortsdaten handeln, welche jeweils einen Zeitpunkt und eine Position des Schreibgeräts 16 zu diesem Zeitpunkt angeben. Das heißt, die Zeitdaten und Ortsdaten geben in diesem Fall wieder, wo sich das Schreibgerät 16 zu einem bestimmten Zeitpunkt befunden hat. Dies kann der Zeitpunkt der Ermittlung der Identifikationsdaten sein, so dass durch die Zeitdaten und Ortsdaten auch verifiziert wird, dass eine bestimmte Person B, auf welche sich die Identifikationsdaten beziehen, zu dem bestimmten Zeitpunkt das Schreibgerät bedient hat. Die Zeitdaten werden beispielsweise durch eine Uhr ermittelt, die in das Schreibgerät 16 integriert ist. Die Ortsdaten lassen sich durch eine Ortungseinrichtung im Schreibgerät 16 ermitteln, die mit dem Global Positioning System (GPS) kommuniziert. Die Zeitdaten und Ortsdaten lassen sich dann zusammen mit den Identifikationsdaten an die externe Kommunikationseinheit 20 übermitteln.

Alternativ oder zusätzlich ist es auch möglich, dass die weiteren Daten, die zur Erzeugung des Identifikationscodes verwendet werden, einen Schlüssel umfassen, der geheim ist und insbesondere nicht aus dem Schreibgerät 16 auslesbar ist. Der Schlüssel kann beispielsweise in der externen Kommunikationseinheit 20 gespeichert sein, etwa in den Code-Erzeugungseinrichtungen 26 oder in einem daran angeschlossenen Speicher, so dass sie an die Code-Erzeugungseinrichtungen 26 übertragbar sind.

Die Code-Erzeugungseinrichtungen 26 generieren einen Identifikationscode, der über die Sende- und Empfangseinheit 24 der externen Kommunikationseinheit 20 zurück an das Schreibgerät 16 übertragen und für den Benutzer B wahrnehmbar angezeigt wird. Hierzu ist das Schreibgerät 16 mit entsprechenden Anzeigeeinrichtungen versehen, beispielsweise mit einem Display. Der Benutzer B kann somit den Identifikationscode ablesen und auf dem Schriftstück 16 niederschreiben. Der Identifikationscode 28 ist dann zusammen mit der geleisteten Unterschrift 12 auf dem Schriftstück 14 dokumentiert.

Gemäß einer weiteren Ausführungsform, die in den Figuren nicht dargestellt ist, sind die Code-Erzeugungseinrichtungen 26 nicht in eine externe Kommunikationseinheit, sondern in das Schreibgerät 16 selbst integriert. Der Vorgang der Ermittlung der Identifikationsdaten, die Erzeugung eines Identifikationscodes aus den Identifikationsdaten sowie aus weiteren Daten, wie etwa Zeitdaten und/oder Ortsdaten sowie gegebenenfalls eines Schlüssels, und die Anzeige des Identifikationscodes 28 werden dann vollständig durch das Schreibgerät 16 realisiert.

In der in Fig. 2 dargestellten Ausführungsform eines erfindungsgemäßen Signatursystems 100 ist das Schreibgerät 16 identisch mit der ersten Ausführungsform in Fig. 1 des Signatursystems 10 ausgebildet und umfasst Identifikationseinrichtungen zur Ermittlung von Identifikationsdaten eines Benutzers B und Sende- und Empfangseinrichtungen 22 zur drahtlosen Übertragung zumindest der Identifikationsdaten an ein mobiles Terminal 30. Im vorliegenden Fall ist das mobile Terminal 30 allerdings dazu ausgebildet, die vom Schreibgerät 16 empfangenen Daten weiter an eine externe Kommunikationseinheit 200 zu übermitteln. Diese externe Kommunikationseinheit 200 kann an einem Ort entfernt vom Schreibgerät 16 und dem mobilen Terminal 30 angeordnet sein und ist mit dem mobilen Terminal 30 drahtlos fernverbunden. Diese Fernverbindung 31 kann über einen Mobilfunk-Übertragungsstandard erfolgen, während das mobile Terminal 30 mit dem Schreibgerät 16 über einen Nahverbindungs-Übertragungsstandard verbunden ist. Die Sende- und Empfangseinheit des mobilen Terminals 30 dient somit dazu, vom Schreibgerät 16 empfangene Daten weiter an die externe Kommunikationseinheit 200 zu übermitteln. Diese umfasst die Code-Erzeugungseinrichtungen 26, die aus den Identifikationsdaten sowie weiteren Daten den Identifikationscode 28 generieren. Wie auch bei den vorhergehenden Ausführungsbeispielen, können diese weiteren Daten Zeitdaten und/oder Ortsdaten umfassen, welche einen Zeitpunkt bzw. eine Position des Schreibgeräts 16 angeben. Des Weiteren können diese Daten einen Schlüssel umfassen, der entweder in den Code-Erzeugungseinrichtungen 26 der externen Kommunikationseinheit 200 gespeichert ist oder an anderer Stelle, so dass der Schlüssel an die Code-Erzeugungseinrichtung 26 übertragbar ist.

Der generierte Identifikationscode 28 wird von der externen Kommunikationseinheit 200 zurück an das mobile Terminal 30 übertragen und von diesem weiter über eine Nahverbindung 33 gemäß einem Nahverbindungs-Übertragungsstandard an das Schreibgerät 16, wo er dem Benutzer B angezeigt werden kann und von diesem auf das Schriftstück 14 niedergeschrieben werden kann.

Bei der vorliegenden Ausführungsform erfolgt somit eine Auslagerung der externen Kommunikationseinheit 200 an einen Ort entfernt vom mobilen Terminal 30, welches sich in unmittelbarer Nähe des Benutzers B befinden kann. Der Identifikationscode 28 wird somit außerhalb der Sphäre des Zugriffs des Benutzers B generiert.

Die Erzeugung des Identifikationscodes 28 kann bei allen vorstehend beschriebenen Ausführungsformen durch einen geheimen Algorithmus erfolgen.

Die Unterschrift 12 eines Benutzers B auf dem Schriftstück 14 wird somit nach den folgenden Verfahren verifiziert. Zunächst erstellt der Benutzer B die Unterschrift 12 auf dem Schriftstück 14 mittels des Schreibgeräts 16. Darüber hinaus wird der Benutzer B durch das Schreibgerät 16 identifiziert. Diese Identifizierung kann unmittelbar vor, während oder unmittelbar nach dem Erstellen der Unterschrift 12 erfolgen.

Aus den Identifikationsdaten, die mit der Identität des Benutzers B verknüpft sind, sowie aus weiteren Daten wird der Identifikationscode 28 erzeugt. Diese Erzeugung erfolgt in Code-Erzeugungseinrichtungen 26, die je nach Ausführungsform im Schreibgerät 16, in einem mobilen Terminal, das als externe Kommunikationseinheit 20 dient, oder in einer externen Kommunikationseinheit 200 entfernt von einem mobilen Terminal 30 angeordnet ist, welche als Verbindungsrelais zwischen dem Schreibgerät 16 und der externen Kommunikationseinheit 200 angeordnet ist. Bei den weiteren Daten, die zur Erzeugung des Identifikationscodes 28 verwendet werden, handelt es sich beispielsweise um Zeitdaten und/oder Ortsdaten, welche jeweils einen Zeitpunkt bzw. eine Position des Schreibgeräts 16 angeben. Als weitere Daten kann ein Schlüssel verwendet werden, der an die Code-Erzeugungseinrichtung 26 übertragbar ist oder darin gespeichert ist, jedenfalls nicht öffentlich zugänglich ist.

## Patentansprüche

1. Signatursystem zur Verifikation einer Unterschrift, umfassend ein Schreibgerät (16), das mit Identifikationseinrichtungen zur Ermittlung von Identifikationsdaten ausgestattet ist, die mit der Identität eines Benutzers (B) des Schreibgeräts (16) verknüpft sind, und Code-Erzeugungseinrichtungen (26) zur Erzeugung eines Identifikationscodes (28) aus den Identifikationsdaten und aus weiteren Daten, welches Schreibgerät (16) ferner Anzeigeeinrichtungen zur Anzeige des Identifikationscodes (28) umfasst.

2. Signatursystem gemäß Anspruch 1, **dadurch gekennzeichnet, dass** die weiteren Daten Zeitdaten und/oder Ortsdaten umfassen, welche jeweils einen Zeitpunkt und eine Position des Schreibgeräts (16) angeben.

3. Signatursystem gemäß Anspruch 1 oder 2, **dadurch gekennzeichnet, dass** die weiteren Daten einen Schlüssel umfassen, der in den Code-Erzeugungseinrichtungen gespeichert ist oder an diese übertragbar ist.

4. Signatursystem gemäß einem der Ansprüche 1 bis 3, **dadurch gekennzeichnet, dass** die Identifikationseinrichtungen zur Erfassung eines Zugangscodes vorgesehen sind, der vom Benutzer (B) einzugeben ist.

5. Signatursystem gemäß einem der Ansprüche 1 bis 3, **dadurch gekennzeichnet, dass** die Identifikationseinrichtungen zur Erfassung biometrischer Merkmale des Benutzers (B) vorgesehen sind.

6. Signatursystem gemäß Anspruch 5, **dadurch gekennzeichnet, dass** die Identifikationseinrichtungen einen Fingerabdruckscanner umfassen.

7. Signatursystem gemäß Anspruch 5, **dadurch gekennzeichnet, dass** die Identifikationseinrichtungen einen Irisscanner umfassen.

8. Signatursystem gemäß einem der Ansprüche 1 bis 7, **dadurch gekennzeichnet, dass** die Code-Erzeugungseinrichtungen (26) in das Schreibgerät (16) integriert sind.

9. Signatursystem gemäß einem der Ansprüche 1 bis 7, **gekennzeichnet durch** eine externe Kommunikationseinheit (20, 200), in welche die Code-Erzeugungseinrichtungen (26) integriert sind, und durch Kommunikationsmittel zur Übertragung der Identifikationsdaten vom Schreibgerät (16) zu der externen Kommunikationseinheit (20, 200) und zur Rückübertragung des erzeugten Identifikationscodes (28) zum Schreibgerät (16).

10. Signatursystem gemäß Anspruch 9, **dadurch gekennzeichnet, dass** die Kommunikationsmittel drahtlose Kommunikationsmittel sind.

11. Signatursystem gemäß Anspruch 10, **dadurch gekennzeichnet, dass** die Kommunikationsmittel ein mobiles Terminal (30) umfassen, welches zur Kommunikation einerseits mit dem Schreibgerät (16) und andererseits mit der externen Kommunikationseinheit (200) eingerichtet ist.

12. Signatursystem gemäß Anspruch 11, **dadurch gekennzeichnet, dass** das mobile Terminal (30) zur Kommunikation mit dem Schreibgerät (16) über einen Nahverbindungs-Übertragungsstandard und zur Kommunikation mit der externen Kommunikationseinheit (200) über einen Mobilfunk-Übertragungsstandard eingerichtet ist.

13. Signatursystem gemäß Anspruch 9, **dadurch gekennzeichnet, dass** die externe Kommunikationseinheit ein mobiles Terminal (20) umfasst.

14. Signatursystem gemäß einem der Ansprüche 9 bis 13, **dadurch gekennzeichnet, dass** die externe Kommunikationseinheit einen Speicher zur Speicherung des Identifikationscodes und/oder der Identifikationsdaten umfasst.

15. Signatursystem gemäß einem der vorhergehenden Ansprüche, **dadurch gekennzeichnet, dass** das Schreibgerät (16) ein Stift ist.

16. Signaturverfahren zur Verifikation einer Unterschrift, **gekennzeichnet durch** die folgenden Schritte:
- Erstellen einer Unterschrift mittels eines Schreibgeräts (16) auf einem Schriftstück (14),
- Identifizieren des Benutzers (B) des Schreibgeräts (16) durch das Schreibgerät (16),
- Erzeugen eines Identifikationscodes (28) aus Identifikationsdaten, die mit der Identität des Benutzers (B) verknüpft sind, und aus weiteren Daten,
- Anzeigen des Identifikationscodes (28) durch das Schreibgerät (16),
- Niederschrift des Identifikationscodes (28) auf dem Schriftstück (14).

17. Signaturverfahren gemäß Anspruch 16, **dadurch gekennzeichnet, dass** die weiteren Daten Zeitdaten und/oder Ortsdaten umfassen, welche jeweils einen Zeitpunkt und eine Position des Schreibgeräts (16) angeben.

18. Signatursystem gemäß Anspruch 16 oder 17, **dadurch gekennzeichnet, dass** die weiteren Daten einen Schlüssel umfassen, der in Einrichtungen, die den Identifikationscode (28) erzeugen, gespeichert ist oder an diese übertragbar ist.

19. Signaturverfahren gemäß einem der Ansprüche 16 bis 18, **dadurch gekennzeichnet, dass** der Benutzer (B) anhand eines von ihm eingegebenen Zugangscodes identifiziert wird.

20. Signaturverfahren gemäß einem der Ansprüche 16 bis 18, **dadurch gekennzeichnet, dass** der Benutzer (B) anhand biometrischer Merkmale identifiziert wird.

21. Signaturverfahren gemäß einem der Ansprüche 16 bis 19, **dadurch gekennzeichnet, dass** der Identifikationscode (28) durch das Schreibgerät (16) erzeugt wird.

22. Signaturverfahren gemäß einem der Ansprüche 16 bis 20, **dadurch gekennzeichnet, dass** der Identifikationscode (28) durch eine externe Kommunikationseinheit (20, 200) erzeugt wird, an welche die Identifikationsdaten vom Schreibgerät (16) übertragen werden und welche den erzeugten Identifikationscode (28) zurück zum Schreibgerät (16) überträgt.

23. Signaturverfahren gemäß Anspruch 22, **dadurch gekennzeichnet, dass** die Identifikationsdaten über ein mobiles Terminal (30) an die externe Kommunikationseinheit (200) übertragen werden, und dass der Identifikationscode (28) über dieses mobile Terminal (30) zurück zum Schreibgerät (16) übertragen wird.

24. Signatursystem gemäß Anspruch 22, **dadurch gekennzeichnet, dass** die externe Kommunikationseinheit selbst ein mobiles Terminal (20) ist.

25. Signatursystem gemäß einem der Ansprüche 22 bis 24, **dadurch gekennzeichnet, dass** der Identifikationscode (28) und/oder der Identifikationsdaten in der externen Kommunikationseinheit gespeichert werden.

## Claims

1. Signature system for verifying a signature comprising a writing instrument (16) equipped with identification devices for identifying identification data connected with the identity of a user (B) of the writing instrument (16), and code generation devices (26) for generating an identification code (28) from the identification data and from other data, said writing instrument (16) further comprising display devices for displaying the identification code (28).

2. Signature system according to claim 1, **characterised in that** the other data comprise chronological data and/or location data indicating a time and a position of the writing instrument (16).

3. Signature system according to claims 1 or 2, **characterised in that** the other data comprise a key which is stored in the code generation devices, or can be transmitted to them.

4. Signature system according to one of claims 1 to 3, **characterised in that** the identification devices are provided to identify an access code entered by the user (B).

5. Signature system according to one of claims 1 to 3, **characterised in that** the identification devices are provided to identify biometric features of the user (B).

6. Signature system according to claim 5, **characterised in that** the identification devices comprise a fingerprint scanner.

7. Signature system according to claim 5, **characterised in that** the identification devices comprise an iris scanner.

8. Signature system according to one of claims 1 to 7, **characterised in that** the code generation devices (26) are integrated inside the writing instrument (16).

9. Signature system according to one of claims 1 to 7, **characterised by** an external communication unit (20, 200) inside which the code generation devices (26) are integrated, and by communication means for transmitting the identification data from the writing instrument (16) to the external communication unit (20, 200) and for retransmitting the generated identification code (28) to the writing instrument (16).

10. Signature system according to claim 9, **characterised in that** the communication means are wireless communication means.

11. Signature system according to claim 10, **characterised in that** the communication means comprise a mobile terminal (30) equipped to communicate with the writing instrument (16) on the one hand, and with the external communication unit (200) on the other.

12. Signature system according to claim 11, **characterised in that** the mobile terminal (30) is equipped to communicate with the writing instrument (16) via a near-field communication transmission standard and to communicate with the external communication unit (200) via a mobile telecommunication transmission standard.

13. Signature system according to claim 9, **characterised in that** the external communication unit comprises a mobile terminal (20).

14. Signature system according to one of claims 9 to 13, **characterised in that** the external communication unit comprises a memory for saving the identification code and/or identification data.

15. Signature system according to one of the previous claims, **characterised in that** the writing instrument (16) is a pen.

16. Signature method for verifying a signature, **characterised by** the following steps:
- preparation of a signature using a writing Instrument (16) on a document (14),
- identification of the user (B) of the writing Instrument (16) by the writing Instrument (16),
- generation of an identification code (28) from identification data connected with the identity of the user (B), and from other data,
- display of the identification code (28) by the writing instrument (16),
- recording of the identification code (28) on the document (14).

17. Signature method according to claim 16, **characterised in that** the other data comprise chronological data and/or location data indicating a time and a position of the writing Instrument (16).

18. Signature system according to claim 16 or 17, **characterised in that** the other data comprise a key which is stored in devices which generate the identification code (28), or can be transmitted to them.

19. Signature method according to one of claims 16 to 18, **characterised in that** the user (B) is identified by an access code entered by him.

20. Signature method according to one of claims 16 to 18, **characterised in that** the user (B) is identified by biometric features.

21. Signature method according to one of claims 16 to 19, **characterised in that** the identification code (28) is generated by the writing instrument (16).

22. Signature method according to one of claims 16 to 20, **characterised in that** the identification code (28) is generated by an external communication unit (20, 200), to which the identification data are transmitted from the writing instrument (16), and which retransmits the generated identification code (28) back to the writing instrument (16).

23. Signature method according to claim 22, **characterised in that** the identification data are transmitted via a mobile terminal (30) to the external communication unit (200), and **in that** the identification code (28) is transmitted back to the writing instrument (16) via this mobile terminal (30).

24. Signature system according to claim 22, **characterised in that** the external communication unit Is itself a mobile terminal (20).

25. Signature system according to one of claims 22 to 24, **characterised in that** the identification code (28) and/or the identification data are stored in the external communication unit.

## Revendications

1. Système de signature pour la vérification d'une signature, comportant un instrument d'écriture (16) qui est équipé de dispositifs d'identification pour déterminer des données d'identification associées à l'identité d'un utilisateur (B) de l'instrument d'écriture (16), et de dispositifs de génération de code (26) pour générer un code d'identification (28) à partir des données d'identification et de données supplémentaires, lequel instrument d'écriture (16) comporte en outre des dispositifs d'affichage pour afficher le code d'identification (28).

2. Système de signature selon la revendication 1, **caractérisé en ce que** les données supplémentaires comportent des données temporelles et/ou des données spatiales qui indiquent respectivement un instant et une position de l'instrument d'écriture (16).

3. Système de signature selon la revendication 1 ou 2, **caractérisé en ce que** les données supplémentaires comportent une clé qui est mémorisée dans les dispositifs de génération de code ou qui peut être transmise à ceux-ci.

4. Système de signature selon l'une des revendications 1 à 3, **caractérisé en ce que** les dispositifs d'identification sont destinés à saisir un code d'accès qui doit être entré par l'utilisateur (B).

5. Système de signature selon l'une des revendications 1 à 3, **caractérisé en ce que** les dispositifs d'identification sont destinés à détecter des caractéristiques biométriques de l'utilisateur (B).

6. Système de signature selon la revendication 5, **caractérisé en ce que** les dispositifs d'identification comportent un lecteur d'empreintes digitales.

7. Système de signature selon la revendication 5, **caractérisé en ce que** les dispositifs d'identification comportent un lecteur d'iris.

8. Système de signature selon l'une des revendications 1 à 7, **caractérisé en ce que** les dispositifs de génération de code (28) sont intégrées dans l'instrument d'écriture (16).

9. Système de signature selon l'une des revendications 1 à 7, **caractérisé par** une unité de communication externe (20, 200) dans laquelle sont intégrés les dispositifs de génération de code (26), et par des moyens de communication destinés à transmettre les données d'identification de l'instrument d'écriture (16) à l'unité de communication externe (20, 200) et à retransmettre le code d'identification (28) généré à l'instrument d'écriture (16).

10. Système de signature selon la revendication 9, **caractérisé en ce que** les moyens de communication sont des moyens de communication sans fil.

11. Système de signature selon la revendication 10, **caractérisé en ce que** les moyens de communication comportent un terminal mobile (30) qui est conçu pour communiquer d'une part avec l'instrument d'écriture (16) et d'autre part avec l'unité de communication externe (200) .

12. Système de signature selon la revendication 11, **caractérisé en ce que** le terminal mobile (30) est conçu pour communiquer avec l'instrument d'écriture (16) en utilisant une norme de transmission à courte distance et pour communiquer avec l'unité de communication externe (200) en utilisant une norme de transmission radio mobile.

13. Système de signature selon la revendication 9, **caractérisé en ce que** l'unité de communication externe comporte un terminal mobile (20).

14. Système de signature selon l'une des revendications 9 à 13, **caractérisé en ce que** l'unité de communication externe comporte une mémoire pour mémoriser le code d'identification et/ou les données d'identification.

15. Système de signature selon l'une des revendications précédentes, **caractérisé en ce que** l'instrument d'écriture (16) est un stylet.

16. Procédé de signature pour vérifier une signature, **caractérisé par** les étapes suivantes consistant à :
produire une signature au moyen d'un instrument d'écriture (16) sur un document écrit (14),
identifier l'utilisateur (B) de l'instrument d'écriture (16) par l'intermédiaire de l'instrument d'écriture (16),
générer un code d'identification (28) à partir de données d'identification associées à l'identité de l'utilisateur (B) et à partir de données supplémentaires,
afficher le code d'identification (28) au moyen de l'instrument d'écriture (16),
apposer le code d'identification (28) sur le document écrit (14).

17. Procédé de signature selon la revendication 16, **caractérisé en ce que** les données supplémentaires comportent des données temporelles et/ou des données spatiales qui indiquent respectivement un instant et une position de l'instrument d'écriture (16).

18. Procédé de signature selon la revendication 16 ou 17, **caractérisé en ce que** les données supplémentaires comportent une clé mémorisée dans des dispositifs qui génèrent le code d'identification (28), ou qui peut être transmise à ceux-ci.

19. Procédé de signature selon l'une des revendications 16 à 18, **caractérisé en ce que** l'utilisateur (B) est identifié au moyen d'un code d'accès qu'il a entré.

20. Procédé de signature selon l'une des revendications 16 à 18, **caractérisé en ce que** l'utilisateur (B) est identifié au moyen de caractéristiques biométriques.

21. Procédé de signature selon l'une des revendications 16 à 19, **caractérisé en ce que** le code d'identification (28) est généré par l'instrument d'écriture (16).

22. Procédé de signature selon l'une des revendications 16 à 20, **caractérisé en ce que** le code d'identification (28) est généré par une unité de communication externe (20, 200) à laquelle sont transmises les données d'identification de l'instrument d'écriture (16) et qui retransmet le code d'identification (28) généré à l'instrument d'écriture (16).

23. Procédé de signature selon la revendication 22, **caractérisé en ce que** les données d'identification sont transmises à l'unité de communication externe (200) par un terminal mobile (30), et **en ce que** le code d'identification (28) est retransmis à l'instrument d'écriture (16) par l'intermédiaire de ce terminal mobile (30) .

24. Procédé de signature selon la revendication 22, **caractérisé en ce que** l'unité de communication externe est elle-même un terminal mobile (20).

25. Procédé de signature selon l'une des revendications 22 à 24, **caractérisé en ce que** le code d'identification (28) et/ou les données d'identification sont mémorisés dans l'unité de communication externe.
